# FASCICULE DE BREVET EUROPEEN

(11) **EP 0 692 205 B1**
(45) Date de publication et mention de la délivrance du brevet: **24.03.1999**
(21) Numéro de dépôt: 95401643.2
(22) Date de dépôt: 07.07.1995
(51) Int. Cl.: A43B 13/22, B60C 11/12, E01C 13/04

(54) **Surface antidérapante, en particulier surface de support d'une semelle de chaussure**
Antirutschfläche, insbesondere Lauffläche einer Schuhsohle
Antislip-surface, in particular for a shoesole

(30) Priorité: 12.07.1994 FR 9408611
(43) Date de publication de la demande: 17.01.1996
(73) Titulaire: S.A.R.L. TECHNISYNTHESE, 49110 Saint-Pierre-Montlimart (FR)
(72) Inventeur: Vermonet, Christian, F-49300 Cholet (FR)
(74) Mandataire: Dawidowicz, Armand

(56) Documents cités:
- EP-A- 0 165 353
- EP-A- 0 202 122
- DE-C- 969 455
- FR-A- 2 428 706
- FR-A- 2 453 939
- GB-A- 2 056 925
- US-A- 4 584 221
- US-A- 4 724 624

## Description

La présente invention concerne une surface antidérapante formant surface de support en élastomère tel que caoutchouc naturel ou synthétique, polychlorure de vinyle ou similaire du type comprenant un réseau de sculptures en relief, formant un grand nombre de languettes élastiques perpendiculaires à la surface de support et agencées pour faciliter l'évacuation de l'eau tout en offrant, aussi bien en présence d'eau qu'à sec, un coefficient global de frottement élevé pour éviter le dérapage.

Une telle surface antidérapante trouve application principalement pour la face inférieure d'une semelle de chaussure mais peut avoir d'autres applications, par exemple pour des pneumatiques de véhicules automobiles ou de cycles ou pour des surfaces synthétiques de salles ou de terrains de sport.

On connaît de nombreuses propositions de semelles antidérapantes.

C'est ainsi que FR-A-1.365.430 décrit une semelle comprenant des barrettes transversales planes s'étendant d'un bord à l'autre mais dont au moins certaines sont discontinues, avec des ventouses à bord plat disposées dans les discontinuités, éventuellement au centre d'alvéoles rectangulaires. Dans tous les cas, la circulation de l'eau se fait essentiellement transversalement. En outre, lorsque la chaussure se pose au sol obliquement, comme c'est souvent le cas par exemple pour des chaussures de sport, la résistance au dérapage devient aléatoire.

Il en est de même de la chaussure de bateau proposée par US-A-4.378.641, de la semelle décrite dans FR-A-2.148.347 ou de la surface décrite dans FR-A-2.553.635.

La présente invention vise à fournir une nouvelle surface antidérapante qui ne présente pas les inconvénients connus décrits ci-dessus et qui assure en particulier une évacuation omnidirectionnelle de l'eau et un coefficient global de frottement élevé quel que soit l'angle d'incidence de la surface de support par rapport à la surface d'appui.

A cet effet, la surface selon l'invention est caractérisée en ce que lesdites sculptures sont formées par juxtaposition de dessins constitués chacun de deux ovales, lesdits ovales sont, dans chaque dessin, réunis par une portion de liaison, les dessins sont disposés en quinconce de manière à occuper une position oblique, un ovale d'un dessin est adjacent à la portion de liaison d'un autre dessin, lesdits ovales comportent un réseau interne de droites et de courbes reliées directement ou indirectement à la périphérie interne de l'ovale respectif, lesdites droites sont disposées longitudinalement ou transversalement, la périphérie de chaque dessin est ouverte en au moins deux points.

La disposition oblique des dessins imbriqués les uns dans les autres, conformément à l'invention, assure un écoulement optimal de l'eau dans des canaux sinueux obliques formés entre les dessins, selon un parcours allongé ayant une contenance bien plus élevée que les schémas traditionnels cités précédemment.

Selon une forme de réalisation de l'invention, les ouvertures périphériques d'au moins certains dessins sont ménagées dans les ovales et sont communicantes. On augmente ainsi la capacité de drainage de l'eau.

Dans tous les cas, la grande longueur de la sculpture périphérique de chaque dessin, augmentée de la longueur totale des droites dans chaque ovale et des sculptures de la portion sensiblement rectiligne forment une densité très élevée de languettes élastiques perpendiculaires à la surface de support, ce qui garantit, selon le matériau constitutif utilisé, un amortissement maximal.

La répartition de ces languettes selon des tracés courbes obliques et des droites longitudinales et transversales, assure en outre un coefficient de frottement élevé, quel que soit l'angle d'incidence, lors de l'impact de la surface de support sur la surface d'appui, par exemple de la semelle sur le sol.

L'invention sera bien comprise à la lecture de la description suivante faite en référence au dessin annexé dont la figure unique représente schématiquement à très grande échelle une portion d'une semelle selon un exemple de réalisation de l'invention.

Dans l'exemple de réalisation représenté, la surface antidérapante est constituée de deux types de dessins A et B alternés, chaque dessin étant formé par des languettes en relief perpendiculairement à la surface antidérapante.

Les dessins A et B ont une forme extérieure quasi-identique constituée de deux ovales 1, 1' respectivement réunis par une portion de liaison 2, 2'. Les ovales 1 et 1' contiennent des segments de droite longitudinaux 3, 3' et transversaux 4, 4', ou des segments curvilignes 5, 5', reliés directement ou indirectement à la paroi interne de l'ovale respectif. Les dessins A et B sont disposés en oblique et en quinconce de telle sorte qu'un ovale 1 d'un dessin A est adjacent à une portion de liaison 2' d'un dessin B adjacent et un ovale 1' d'un dessin B est adjacent à une portion de liaison 2 d'un dessin A adjacent. Bien entendu, cette règle ne s'applique plus aux limites de la surface antidérapante, laquelle peut d'ailleurs occuper seulement une partie de la semelle.

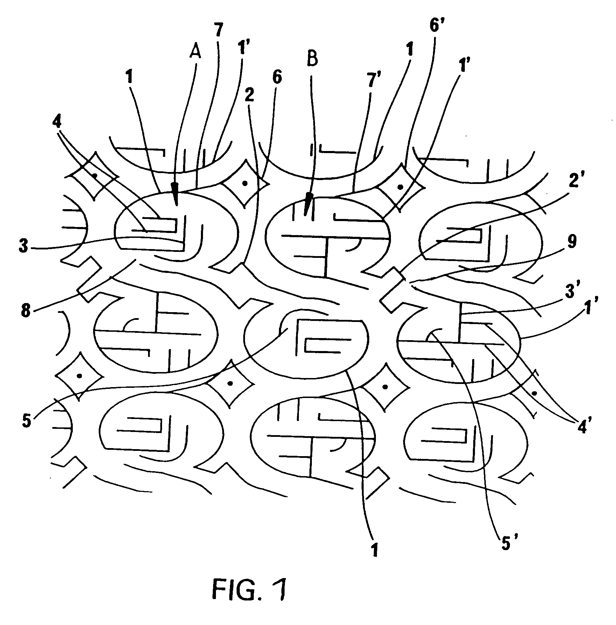

Afin d'éviter la présence d'un vide important à chaque emplacement où deux ovales 1 de deux dessins A et deux ovales 1' de deux dessins B sont adjacents, on prévoit qu'un dessin 6, 6' sensiblement en forme de losange est relié par une ligne 7, 7' à un ovale 1, 1' respectivement. Dans l'exemple représenté, les dessins 6, 6' sont reliés à l'ovale 1, 1' frontal (dans la direction longitudinale de la semelle) de chaque dessin A, B respectivement.

Le dessin A comporte deux ouvertures 8 formées dans les ovales 1 et qui permettent une communication des ovales et de leurs intérieurs. Le dessin B comporte de son côté deux ouvertures 9 dans la zone de liaison 2' qui font communiquer respectivement une partie de l'intérieur de l'ovale 1' correspondant avec l'extérieur.

Le schéma qui vient d'être décrit à titre d'exemple assure une circulation optimale de l'eau tout en assurant un amortissement élevé grâce aux languettes des divers dessins qui forment une densité élevée en saillie de la semelle. La présence de telles languettes courbes, longitudinales et transversales assure en outre un frottement élevé avec le sol pour toutes les positions d'impact. Ce schéma convient donc particulièrement bien pour une chaussure de sport ou une chaussure de bateau, ainsi que pour les semelles servant à la fabrication de telles chaussures.

## Revendications

1. Surface antidérapante formant surface de support en élastomère tel que caoutchouc naturel ou synthétique, polychlorure de vinyle ou similaire du type comprenant un réseau de sculptures en relief formant un grand nombre de languettes élastiques perpendiculaires à la surface de support,
caractérisée en ce que lesdites sculptures sont formées par juxtaposition de dessins (A ; B) constitués chacun de deux ovales (1 ; 1'), lesdits ovales (1 ; 1') sont, dans chaque dessin (A ; B), réunis par une portion de liaison (2 ; 2'), les dessins (A ; B) sont disposés en quinconce de manière à occuper une position oblique, un ovale (1 ; 1') d'un dessin (A ; B) est adjacent à la portion de liaison (2' ; 2) d'un autre dessin (B ; A), lesdits ovales (1 ; 1') comportent un réseau interne de droites (3, 4 ; 3', 4') et de courbes (5 ; 5') reliées directement ou indirectement à la périphérie interne de l'ovale (1 ; 1') respectif, lesdites droites sont disposées longitudinalement ou transversalement, la périphérie de chaque dessin (A ; B) est ouverte en au moins deux points (8 ; 9).

2. Surface antidérapante selon la revendication 1,
caractérisée en ce que les ouvertures périphériques (8) d'au moins certains dessins (A) sont ménagées dans les ovales (1) et sont communicantes.

3. Surface antidérapante selon l'une des revendications 1 et 2,
caractérisée en ce qu'un ovale (1, 1') de chaque dessin (A, B) est relié à un dessin (6, 6') sensiblement en forme de losange par l'intermédiaire d'une ligne (7, 7').

4. Surface antidérapante selon l'une des revendications 1 à 3,
caractérisée en ce qu'elle forme au moins une partie de la face inférieure d'une semelle de chaussure.

5. Surface antidérapante selon l'une des revendications 1 à 3,
caractérisée en ce qu'elle forme au moins une partie de la surface de roulement d'un pneumatique.

6. Surface antidérapante selon l'une des revendications 1 à 3,
caractérisée en ce qu'elle constitue une surface synthétique d'une salle ou d'un terrain de sport.

## Claims

1. Anti-slip surface forming a support surface made from an elastomer such as natural or synthetic rubber, polyvinyl chloride or the like, of the type comprising a sculptured network in relief forming a large number of elastic tabs perpendicular to the support surface,
characterised in that the said sculptures are formed by juxtaposition of designs (A; B) each formed by two ovals (1; 1'), the said ovals (1; 1') are, in each design (A; B), joined by a connection portion (2; 2'), the designs (A; B) are disposed in staggered rows so as to occupy an oblique position, one oval (1; 1') of one design (A; B) is adjacent to the connection portion (2'; 2) of another design (B; A), the said ovals (1; 1') comprise an internal network of straight lines (3, 4; 3',4') and curves (5; 5') connected directly or indirectly to the internal periphery of the respective oval (1; 1'), the said straight lines are disposed longitudinally or transversely, the periphery of each design (A; B) is open at at least two points (8; 9).

2. Anti-slip surface according to claim 1, characterised in that the peripheral openings (8) of at least some designs (A) are provided in the ovals (1) and are intercommunicating.

3. Anti-slip surface according to one of claims 1 and 2,
characterised in that one oval (1, 1') of each design (A, B) is connected to a design (6, 6') substantially in the form of a lozenge by means of a line (7, 7').

4. Anti-slip surface according to one of claims 1 to 3,
characterised in that it forms at least one part of the lower surface of the sole of a shoe.

5. Anti-slip surface according to one of claims 1 to 3,
characterised in that it forms at least a part of the tread of a tyre.

6. Anti-slip surface according to one of claims 1 to 3,
characterised in that it forms a synthetic surface of a sports ball or ground.

## Patentansprüche

1. Antirutschfläche, die eine Lauffläche aus Elastomer, wie etwa Natur- oder Synthesekautschuk, Polyvinylchlorid oder dergleichen, bildet, umfassend ein Netz von erhabenen Profilen, die eine große Anzahl von zur Lauffläche senkrechten elastischen Zungen bilden,
**dadurch gekennzeichnet,** daß die besagten Profile durch die Aneinanderfügung von Mustern (A; B) gebildet werden, die jeweils aus zwei Ovalen (1; 1') bestehen, wobei die besagten Ovale (1; 1') in jedem Muster (A; B) durch einen Verbindungsabschnitt (2; 2') verbunden sind, wobei die Muster (A; B) versetzt angeordnet sind, so daß sie eine schräge Position einnehmen, wobei ein Oval (1; 1') eines Musters (A; B) an einen Verbindungsabschnitt (2'; 2) eines anderen Musters (B; A) angrenzt, wobei die besagten Ovale (1; 1') ein inneres Netz von Geraden (3, 4; 3', 4') und Kurven (5; 5') umfassen, die direkt oder indirekt mit dem inneren Umfang des jeweiligen Ovals (1; 1') verbunden sind, wobei die besagten Geraden in Längs- oder Querrichtung angeordnet sind und wobei der Umfang jedes Musters (A; B) an mindestens zwei Stellen (8; 9) offen ist.

2. Antirutschfläche nach Anspruch 1,
**dadurch gekennzeichnet,** daß die Umfangsöffnungen (8) wenigstens gewisser Muster (A) in den Ovalen (1) vorgesehen sind und miteinander in Verbindung stehen.

3. Antirutschfläche nach einem der Ansprüche 1 und 2,
**dadurch gekennzeichnet,** daß ein Oval (1, 1') jedes Musters (A, B) mit einem Muster (6, 6') in etwa in Form einer Raute über eine Linie (7, 7') verbunden ist.

4. Antirutschfläche nach einem der Ansprüche 1 bis 3,
**dadurch gekennzeichnet,** daß sie wenigstens einen Teil der Unterseite einer Schuhsohle bildet.

5. Antirutschfläche nach einem der Ansprüche 1 bis 3,
**dadurch gekennzeichnet,** daß sie wenigstens einen Teil der Lauffläche eines Reifens bildet.

6. Antirutschfläche nach einem der Ansprüche 1 bis 3,
**dadurch gekennzeichnet,** daß sie eine Kunststoffoberfläche einer Sporthalle oder eines Sportplatzes bildet.
